# EUROPEAN PATENT APPLICATION

(11) **EP 1 437 734 A2**
(43) Date of publication of application: **14.07.2004**
(21) Application number: 04250035.5
(22) Date of filing: 06.01.2004
(51) Int. Cl.: G11B 20/12, G11B 27/32

(54) **Information recording medium, information reproducing apparatus and method, and computer program**

(30) Priority: 07.01.2003 JP 2003001285
(71) Applicant: Pioneer Corporation, Meguro-ku, Tokyo (JP); Kabushiki Kaisha Toshiba, Tokyo (JP)
(72) Inventor: Sawabe, Takao, c/o Pioneer Corporation, Tokorozawa-shi, Saitama (JP); Koda, Takeshi, c/o Pioneer Corporation, Tokorozawa-shi, Saitama (JP); Imamura, Akira, c/o Pioneer Corporation, Tokorozawa-shi, Saitama (JP); Mimura, Hideki, c/o Intellectual Property Division, Minato-ku, Tokyo (JP); Taira, Kazuhiko, c/o Intellectual Property Div., Minato-ku, Tokyo (JP)
(74) Representative: Haley, Stephen

(57) **Abstract**

On an information reproducing medium (100), there are recorded: (i) main video information (HDV), that is representative of a main video picture and is based on a first standard to reproduce and output the main video picture at a first definition, (ii) first subsidiary video information (HDSP), that is representative of a sub-picture and is based on the first standard to reproduce and output the sub-picture at the first definition in such a state that the sub-picture is composed with the main video picture reproduced and outputted at the first definition, and (iii) second subsidiary video information (SDSP), that is representative of the sub-picture and is based on a second standard that is inferior to the first standard, to reproduce and output the sub-picture at the second definition in such a state that the sub-picture is composed with the main video picture reproduced and outputted at the second definition, on the basis of the main video information that is down-converted to the second definition.

## Description

The present invention relates to: an information recording medium, such as a DVD; an information reproducing apparatus and method, such as a DVD player; and a computer program for making a computer function as the information reproducing apparatus.

Conventionally, on a "DVD-Video disc'', which is an optical disc based on a DVD-Video standard, there are typically recorded a main video information (i.e., video information) and a subsidiary video information (i.e., sub-picture information), which are recorded separately from each other.

More specifically, the main video information, which may be representative of a motion picture in a movie, is multi-recorded in a stream manner, as main video information based on a SD (Standard Definition) standard compressed and encoded in accordance with MPEG (Moving Picture Expert Group) 1 or MPEG 2 as an example of a compressing and encoding method, in a program stream defined by the MPEG 1 or 2. That is, one video stream exists in the program stream.

On the other hand, the sub-picture information, which may be representative of captions or subtitles in a movie, is multi-recorded as sub-picture information based on the SD standard also, in the stream manner, in the program stream. That is, one or more sub-picture streams exist in the program stream. For example, there are thirty two sub-picture streams in the program stream at the maximum, such as a sub-picture stream for Japanese caption, a sub-picture stream for English caption and so on.

Incidentally, audio information representative of sound and the like in a movie, is also multi-recorded, in the stream manner, in the program stream. There are eight audio streams at the maximum.

A DVD player for reproducing such a DVD disc is arranged to compose the main video information and the sub-picture information and to display or output the composed information, in a certain form, such as a form that the sub-picture is superimposed on the main picture or a form that the sub-picture is assembled into a black band disposed at top or bottom of the main picture, via a display device such as a television monitor.

By the way, in a BS digital broadcasting or the like, so-called "high vision" video information is presented. The high vision video information is based on a HD (High Definition) standard that is superior to the SD standard, in a picture quality. Although a display device such as a television monitor compatible with the HD standard and capable of displaying/outputting the video information based on the HD standard are getting in common, a display monitor such as a conventional television monitor compatible with the SD standard is still dominant. Therefore, there is a strong demand for a display device such as a television monitor that is based on the HD but capable of displaying/outputting the video information based on the SD standard, by any means. To satisfy such a demand, a so-called "down-converting" technique, which converts the video information based on the HD standard to the video information based on the SD standard, is already in a practical use as disclosed in Japanese Application Laid-Open No. Hei10-79915 and Japanese Application Laid-Open No. 2001-136483.

According to such a down-converting technique, the video information based on the HD standard can be displayed/outputted as the video information based on the SD standard, via a display device such as a television monitor that is not compatible with the HD standard but based on the SD standard.

There is also a strong demand for a DVD capable of recording, instead of the video information based on the SD standard, the video information based on the HD standard that is superior in a picture quality. To satisfy this demand, the video information based on the HD standard may be recorded, instead of the video information based on the SD standard, on the DVD, in an efficient video coding scheme such as blue laser or MPEG4 part 10 coding (hereinafter referred to as just a "MPEG4").

Nevertheless, even if the main video information and sub-picture information based on the HD standard can be recorded on one DVD in an efficient video coding scheme such as blue laser or MPEG4, a problem as follows arises.

That is, a display device such as a television monitor compatible with the HD is required in order to reproduce and display the main video information and the sub-picture information, which are based on the HD standard and recorded on the DVD. Nevertheless, it is demanded that the main video information and the sub-picture information which are based on the HD standard and recorded on the DVD are reproduced and displayed, by any means, also with a display device in a wide use such as a television monitor that is not compatible with the HD but the SD. It seems likely to satisfy this demand, via the down-converting technique disclosed in the aforementioned patent documents 1 or 2, by down-converting the video information obtained by composing the main video information and the sub-picture information, each of which is based on the HD standard. According to studies of the inventors, however, down-converting the video information composed as such, especially down-converting a part of the video information corresponding to the sub-picture information including Japanese caption, English caption and the like, spurs the deterioration of the picture quality of the Japanese caption or the like. As a result, a technical problem of illegible or hardly legible Japanese caption or the like arises.

The present invention has been accomplished in view of the aforementioned problem. It is therefore an object of the invention to provide an information recording medium by which a deterioration of picture quality is efficiently avoided as for a sub-picture such as a caption or subtitle based on subsidiary video information, while main video information based on a HD standard is down-converted to main video information based on a SD standard during its reproduction. It is further an object of the invention to provide an information reproducing apparatus and method allowing the reproduction of such an information recording medium. It is further an object of the invention to provide a computer program for making a computer function as such an information reproducing apparatus.

The above object of the present invention can be achieved by an information recording medium, on which there are recorded: main video information, that is representative of a main video picture and is based on a first standard with a first definition so as to reproduce and display the main video picture at the first definition; first subsidiary video information, that is representative of a sub-picture and is based on the first standard so as to reproduce the sub-picture at the first definition in such a state that the sub-picture is composed with the main video picture reproduced and displayed at the first definition; and second subsidiary video information, that is representative of the sub-picture and is based on a second standard with a second definition which is inferior to the first definition so as to reproduce the sub-picture at the second definition in such a state that the sub-picture is composed with the main video picture reproduced and displayed at the second definition, on the basis of the main video information that is down-converted to the second definition.

According to this information recording medium, there are recorded a main video information such as video data (e.g. HDVD as discussed later), that is based on a first standard of relatively high definition such as a HD standard, and a subsidiary video information such as a sub-picture data (e.g. HDSP as discussed later), that is also based on the first standard of relatively high definition. Therefore, if the recording medium is reproduced through an information reproducing apparatus such as a DVD player capable of outputting informations to a display device of the high definition such as a HD television monitor, it is possible to reproduce and output high definition images as a whole, by composing the first subsidiary video information of high definition with the main video information of high definition.

Now assume that the reproduction only using the main video information and the first subsidiary video information is performed through an information reproducing apparatus having a down-converting function such as a DVD player capable of reproducing and outputting informations to a display device of low definition such as a SD television monitor. Then, since the main video information and the first subsidiary video information are down-converted, picture quality due to the first subsidiary video information such as picture quality of Japanese caption is deteriorated and thereby the Japanese caption is hardly read or cannot be read. Otherwise, outlines of each line constituting a character or letter becomes jagged, deformed or blurred, i.e. the sub-pictures cannot be viewed clearly,

On the contrary, in addition to the main video information and the first subsidiary video information, a second subsidiary video information such as a sub-picture data (e.g. SDSP as discussed later), that is based on a second standard of low definition such as a SD standard is also recorded on the information recording medium of the present invention. Sub-pictures represented by this second subsidiary video information are the same in their content as sub-pictures represented by the first subsidiary video information. For example, the first and second subsidiary video informations are for reproducing and outputting the same captions having different definitions (i.e., different finenesses). Therefore, it is possible to down-convert the main video information, and composing the down-converted main video information of low definition with the second subsidiary video information of low definition from the origin. Then, by virtue of this composition, the sub-picture such as Japanese caption is not adversely affected by the down-conversion. Therefore, it is possible to reproduce and output images including sub-pictures such as Japanese caption having a particularly appropriate shape although low definition as a whole, by composing the sub-pictures such as characters or letters having outlines, as expected when the data of the second subsidiary video information is generated, and the main video information of low definition that is down-converted to the low definition. Relating to this, since the sub-picture based on the second subsidiary video information, such as Japanese caption, is intended to be outputted and displayed as a sub-picture of low definition from the origin, it is remarkably superior, in its picture quality, to a sub-picture of low definition resulting from down-converting the first subsidiary video information of high definition.

Thus, according to the information recording medium of the present invention, the sub-picture is not adversely affected by the down-conversion, even in the case that the main video information is down-converted to be outputted for the reproduction of the medium, depending on kinds of information reproducing apparatus. Therefore, it is possible to clearly display kanji characters that are included in the sub-picture.

In an aspect of the information recording medium of the present invention, there is further recorded a first identifying information that indicates whether or not the first subsidiary video information is recorded.

According to this aspect, when the medium is reproduced, the information reproducing apparatus refers the first identifying information such as an HD Availability flag as mentioned below. Then, in accordance with the first identifying information, it is judged whether or not the first subsidiary video information, which may be a HDSP as mentioned below, is recorded. Therefore, if the first subsidiary video information is recorded, the information reproducing apparatus, which reproduces and outputs informations to a high definition display device such as a HD television monitor, can compose the main video information and the first subsidiary video information to reproduce and output a resultant high definition image. On the contrary, if the first subsidiary video information is not recorded, the information reproducing apparatus, which reproduces and outputs informations to a low definition display device such as a SD television monitor, can down-convert the main video information and compose it with the second subsidiary video information to reproduce and output a resultant low definition image.

In another aspect of the information recording medium of the present invention, there is further recorded a second identifying information that indicates whether or not the second subsidiary video information is recorded.

According to this aspect, when the medium is reproduced, the information refers the second identifying information such as a SD Availability flag as mentioned below. Then, in accordance with the second identifying information, it is judged whether or not the second subsidiary video information, which may be a SDSP as mentioned below, is recorded. Therefore, if the second subsidiary video information is not recorded, the information reproducing apparatus, which reproduces and outputs informations to a high definition display device such as a HD television monitor, can compose the main video information and the first subsidiary video information to reproduce and output a resultant high definition image. On the contrary, if the second subsidiary video information is recorded, the information reproducing apparatus, which reproduces and outputs informations to a low definition display device such as a SD television monitor, can down-convert the main video information and compose it with the second subsidiary video information to reproduce and output a low definition image.

In the aforementioned aspect in which the identifying information is recorded, the main video information, the first subsidiary video information and the second subsidiary video information may be respectively formed into streams to be thereby multiplexed-and -recorded, a first indicating information to indicate a stream relating to the first subsidiary video information and a second indicating information to indicate a stream relating to the second subsidiary video information may be further recorded on, the main video information may include (i) a first main video information that is representative of one video picture having a first aspect ratio as the main video picture and (ii) a second main video information that is representative of another video picture having a second aspect ratio different from the first aspect ratio as the main video picture, an indicating information recording area may be prepared in a predetermined area on the information recording medium, for recording a third indicating information to indicate a stream relating to a third subsidiary video information, that is based on the second standard with the second definition and is to be composed with the second main video information, and the first indicating information may be recorded instead of the third indicating information in the indicating information recording area, in a case that the first identifying information indicates that the first subsidiary video information is recorded.

In this arrangement, the main video information, the first subsidiary video information and the second subsidiary video information are respectively formed into steams to be thereby multiplexed-and-recorded. These informations may be included as a video stream, a sub-picture stream and another sub-picture stream, in a program stream based on the aforementioned MPEG 1 or 2, otherwise in a program stream or transport stream based on the MPEG 4. Then, the first indicating information and the second indicating information are further recorded in a part of a PGC sub-picture stream control table as mentioned below. On the other hand, the first main video information representative of the main video picture (e.g., the main picture) having a first aspect ratio and the second main video information representative of the main video picture having a second aspect ratio are recorded, as the main video information. Furthermore, on the information recording medium, there is provided a recording area for the indicating information to record the third indicating information that indicates a stream, which is based on the second standard of the second definition and relates to the third subsidiary video information to be composed with the second main video information. The third indicating information is for indicating the stream relating to the third subsidiary video information in the case that the third subsidiary video information is representative of a sub-picture having an aspect ratio (e.g. 4:3) different from another aspect ratio (e.g. 16:9) of the main video picture which may be based on the HD standard. The third indicating information may be recorded in a part of the PGC sub-picture stream control table as discussed later (in an area for aspect ratio 4:3). Particularly, instead of the third indicating information, the first indicating information is recorded in the recording area for indicating informations in the case that the first identifying information such as a HD flag indicates that the first subsidiary video information is recorded.

Therefore, when the medium is reproduced, the information reproducing apparatus makes access to the recording area for indicating informations and further refers to the first indicating information or the like, to identify the stream relating to the first subsidiary video information. Then, it is understood that the first subsidiary video information of high definition corresponding to the aspect ratio of the high definition main video picture, e.g. 16:9, is identified. Therefore, the information reproducing apparatus, which reproduces and outputs informations to a high definition display device such as a television monitor compatible with the HD standard and having the aspect ratio 16:9, can compose the main video information and the first subsidiary video information to reproduce and output a high definition image. On the contrary, the third subsidiary video information is identified, in the case that the recording area for indicating informations are accessed and the third indicating information is referred to. Then, it is understood that the third subsidiary video information of low definition having the aspect ratio 4:3 that does not correspond to the aspect ratio of the high definition main video picture, e.g. 16:9, is identified. Therefore, the information reproducing apparatus, which reproduces and outputs informations to a low definition display device such as a television monitor compatible to the SD standard, can compose the main video information based on the SD standard and the third subsidiary video information to reproduce and output a low definition image.

In another aspect of the information recording medium of the present invention, the second subsidiary video information is representative of one sub-picture having the aspect ratio same as the aspect ratio of the main video picture, as the sub-picture.

According to this aspect, the sub-picture represented by the second subsidiary video information based on the SD standard for example has the same aspect ratio (e.g. 16:9) as that of the main video picture based on the HD standard for example. Therefore, when the medium is reproduced, it is easy to reproduce and output an image having the aspect ratio 16:9 and based on the SD standard for example by down-converting the main video information and then composing it with the second subsidiary video information.

In another aspect of the information recording medium of the present invention, the second subsidiary video information is representative of one sub-picture in a letterbox format, as the sub-picture.

According to this aspect, the sub-picture represented by the second subsidiary video information based on the SD standard for example is made in a letterbox format. Therefore, when it is reproduced, it is possible to reproduce and output an image, based on the SD standard, in which the sub-picture such as a caption is displayed in the letterbox format, by down-converting the main video information and then composing it with the second subsidiary video information.

In another aspect of the information recording medium of the present invention, wherein the second subsidiary video information is representative of one sub-picture in a pan and scan format, as the sub-picture.

According to this aspect, the sub-picture represented by the second subsidiary video information based on the SD format for example is made in a pan and scan format. Therefore, when it is reproduced, it is possible to reproduce and output an image, based on the SD format for example, in which the sub-picture such as a caption is displayed in the pan and scan format, by down-converting the main video information and then composing it with the second subsidiary video information.

The above object of the present invention can be also achieved by an information reproducing apparatus for reproducing information from the above described information recording medium of the present invention (including its various aspects), the apparatus provided with: a reproducing device for reproducing the main video information as well as the first and second subsidiary video informations from the information recording medium; a first down-converter to down-convert the main video information that is reproduced by the reproducing device; and a first composing device for composing the second subsidiary video information that is reproduced by the reproducing device with the main video information that is down-converted by the first down-converter.

According to the information reproducing apparatus of the present invention, firstly, the reproducing device including an optical pickup, a buffer, a multiplexer, a decoder and the like for example, reproduces the main video information and the first and second subsidiary video informations from the information recording medium. Then, the first down-converter down-converts such a reproduced main video information. Thereby, the down-converted main video information, which is an information based on the second standard of low definition, is generated. Then, the first composing device including a mixer or the like for example, composes the second subsidiary video information, which is reproduced by the reproducing device, with the down-converted main video information. Then, the sub-picture such as Japanese caption, which is reproduced and outputted on the basis of the second subsidiary video information, becomes not to be adversely affected by the down-conversion.

Thus, according to the information reproducing apparatus of the present invention, the sub-picture is not adversely affected by the down-conversion, in spite of a fact that the main video information is down-converted to be outputted in the case that information is reproduced and outputted to a display device of low definition such as a television monitor compatible with the SD standard for example. Therefore, it is possible, for example, to clearly display kanji characters that are included in the sub-picture.

Incidentally, in correspondence with various aspects of the information recording medium of the present invention, the information reproducing apparatus of the present invention can also take various aspects.

In one aspect of the information reproducing apparatus of the present invention, the apparatus is further provided with: a second down-converter for down-converting the first subsidiary video information that is reproduced by the reproducing device to the second definition; and a judging device for judging whether or not the second subsidiary video information is recorded on the information recording medium, wherein the first composing device composes the first subsidiary video information that is down-converted by the second down-converter with the main video information that is down-converted by the down-converter, in accordance with a result of a judgement indicating that the second subsidiary video information is not recorded on the information recording medium.

According to this aspect, the second down-converter down-converts the first subsidiary video information, which is reproduced by the reproducing device and based on the HD standard, to an information based on the SD standard for example. The judging device judges whether or not the second subsidiary video information is recorded on the information recording medium. Then, the first composing device composes the down-converted first subsidiary video information with the also down-converted main video information based on the SD standard, in the case that the second subsidiary video information is not recorded on the information recording medium. Therefore, even in the case that the second subsidiary video information is not recorded when it is reproduced and outputted to a low definition display device such as a television monitor compatible with the SD for example, a serious trouble such as an impossibility of the reproduction can be avoided, and thereby the sub-picture such as a caption based on the subsidiary video information can be reproduced and outputted during the reproduction and output of the main video picture although the picture quality of the sub-picture is degraded to a not neglectable degree resulting from the down-conversion as the second best solution depending on the result of the judgement by the judging device.

In this aspect, the apparatus may be further provided with: a second composing device for composing the main video information that is reproduced by the reproducing device with the first subsidiary video information that is reproduced by the reproducing device; a first switching device for outputting the main video information selectively to either the first down-converter or the second composing device; and a second switching device for outputting the first subsidiary video information selectively to either the second down-converter or the second composing device.

According to this aspect, the second composing device composes the main video information that is reproduced by the reproducing device and the first subsidiary video information that is reproduced by the reproducing device. The first switching device outputs the main video information selectively to either the first down-converter or the second composing device. On the other hand, the second switching device outputs the first subsidiary video information selectively to either the second composing device or the second down-converter.

Therefore, when it is reproduced to a high definition display device such as a television monitor compatible with the HD standard for example, it is possible to reproduce and output a high definition image based on the first standard such as the HD standard, without executing the down-conversion, by outputting the main video information and the first subsidiary video information to the second composing device by means of the first and second switching devices. Furthermore, when it is reproduced and outputted to a low definition display device such as a television monitor compatible with the SD standard for example, it is possible to reproduce and output a low definition image based on the second standard such as the SD standard, with down-converting both the main video picture and the sub-picture by outputting the first subsidiary video information to the second down-converter as well as outputting the main video information to the first down-converter, by means of the first and second switching devices in the case that the second subsidiary video information is not recorded on the information recording medium. Alternatively, when it is reproduced and outputted to a low definition display device such as a television monitor compatible with the SD standard, it is possible to reproduce and output a low definition image based on the second standard such as the SD standard, with down-converting the main video picture but eliminating the adverse effect on the sub-picture from the down-conversion, by outputting the second subsidiary video information to the first composing device as well as outputting the main video information to the first down-converter, by means of the first and second switching devices, in the case that the second subsidiary video information is recorded on the information recording medium.

Thus, in any case, it is possible to reproduce and output an image remarkably and actually improved in its definition (fineness) or quality, by utilizing the almost maximum of the main video information and at least one of the first and second subsidiary video informations, all of which are recorded on the information recording medium, and by utilizing the almost maximum of the function of the display device such as the television monitor compatible with the SD or HD standard.

The above object of the present invention can be also achieved by an information reproducing method of reproducing information from the above described information recording medium of the present invention (including its various aspects), the method provided with: a reproducing process of reproducing the main video information as well as the first and second subsidiary video informations from the information recording medium; a first down-converting process of down-converting the main video information that is reproduced at the reproducing process; and a first composing process of composing the second subsidiary video information that is reproduced at the reproducing process with the main video information that is down-converted at the first down-converting process.

According to the information reproducing method of the present invention, firstly, in the reproducing process, the main video information as well as the first and second subsidiary video informations are reproduced from the information recording medium by means of an optical pickup, a buffer, a multiplexer, a decoder and the like. Then, in the first down-converting process, such a reproduced main video information is down-converted. Thereby, the down-converted main video information, which is an information based on the low definition second standard, is generated. Then, in the first composing process, the second subsidiary video information, which is reproduced in the reproducing process, is composed with the down-converted main video information, by means of a mixer. Then, the sub-picture such as Japanese caption, which is reproduced and outputted on the basis of the second subsidiary video information, becomes not to be adversely affected by the down-conversion.

Thus, according to the information reproducing method of the present invention, the sub-picture is not adversely affected by the down-conversion, in spite of a fact that the main video information is down-converted to be outputted in the case that information is reproduced and outputted to a low definition display device such as a television monitor compatible with the SD standard for example. Therefore, it is possible, for example, to clearly display kanji characters that are included in the sub-picture.

Incidentally, in correspondence with various aspects of the information recording medium or the information reproducing apparatus of the present invention, the information reproducing method of the present invention can also take various aspects.

The above object of the present invention can be also achieved by a computer program for tangibly embodying a program of instructions executable by a computer to make the computer function as the above described information reproducing apparatus of the present invention (including its various aspects).

According to the computer program of the present invention, the aforementioned information reproducing apparatus of the present invention can be readily realized, by loading and running the computer program product from a recording medium storing the computer program product, such as a ROM (Read Only Memory), a CD-ROM (Compact Disc - Read Only Memory), a DVD-ROM (DVD Read Only Memory) and a hard disk, or by downloading and running the computer program product via the communicating device.

Incidentally, in correspondence with various aspects of the information recording medium of the present invention, the computer program product of the present invention can also take various aspects.

The nature, utility, and further features of this invention will be more clearly apparent from the following detailed description with reference to preferred embodiments of the invention when read in conjunction with the accompanying drawings briefly described below.

In the Drawings;
FIG. 1 is, in its upper part, a plan view schematically showing the structure of the optical disc having a plurality of areas, and in its lower part, a conceptual view of the area structure in its radial direction, in association with the structure illustrated in the upper part of the drawing.
FIG. 2 is a conceptual view illustrating a data structure of data that is recorded on an optical disc according to an embodiment of the present invention.
FIG. 3 is a conceptual view illustrating a detail of a data structure of a VTS (Video Title Set) shown in FIG. 2.
FIG. 4 is a conceptual view illustrating a detail of a data structure of a VTS2 (Video Title Set 2) shown in FIG. 2.
FIG. 5 is a conceptual view illustrating a physical format (physical structure) of the optical disc according to the embodiment.
FIG. 6 is a conceptual view illustrating a logical format (logical structure) of the optical disc according to the embodiment.
FIG. 7 is a conceptual view illustrating logical information of PGC that is recorded on an information recording medium according to the embodiment.
FIG. 8A is a conceptual view illustrating data structures in various specific embodiments of a control table shown in FIG. 7.
FIG. 8B is a conceptual view illustrating data structures in various specific embodiments of the control table shown in FIG. 7.
FIG. 8C is a conceptual view illustrating data structures in various specific embodiments of the control table shown in FIG. 7.
FIG. 9 is a block diagram illustrating an embodiment of the information reproducing apparatus.
FIG. 10 is a block diagram illustrating a converter according to the embodiment of the information reproducing apparatus.
FIG. 11 is a conceptual view illustrating a composition of main video information and subsidiary video information in a specific case according to the embodiment of the information reproducing apparatus.
FIG. 12 is a conceptual view illustrating a composition of main video information and subsidiary video information in another specific case according to the embodiment of the information reproducing apparatus.
FIG. 13 is a conceptual view illustrating a composition of main video information and subsidiary video information in another specific case according to the embodiment of the information reproducing apparatus.
FIG. 14 is a conceptual view illustrating a composition of main video information and subsidiary video information in another specific case according to the embodiment of the information reproducing apparatus.
FIG. 15 is a conceptual view illustrating a composition of main video information and subsidiary video information in another specific case according to the embodiment of the information reproducing apparatus.
FIG. 16 is a conceptual view illustrating a composition of main video information and subsidiary video information in another specific case according to the embodiment of the information reproducing apparatus.
FIG. 17 is a flow chart illustrating an operation in a case that a SD mode is set for a video output mode, according to the embodiment of the information reproducing apparatus.
FIG. 18 is a flow chart illustrating an operation in a case that a HD mode is set for a video output mode, according to the embodiment of the information reproducing apparatus.

Firstly, the relationship between various informations recorded on a DVD as an embodiment of the information recording medium according to this embodiment and the aforementioned various informations recorded on the information recording medium according to the present invention is as follows. The following abbreviations may be used for these informations as the occasion demands, for convenience. In a following Table 1, names of various informations recorded on the information recording medium according to the present invention are listed in the left column of the following table 1, names of various informations recorded on the DVD as an example of the information recording medium according to this embodiment are listed in the center column, and the abbreviations of them are listed with double quotation marks in the right column.

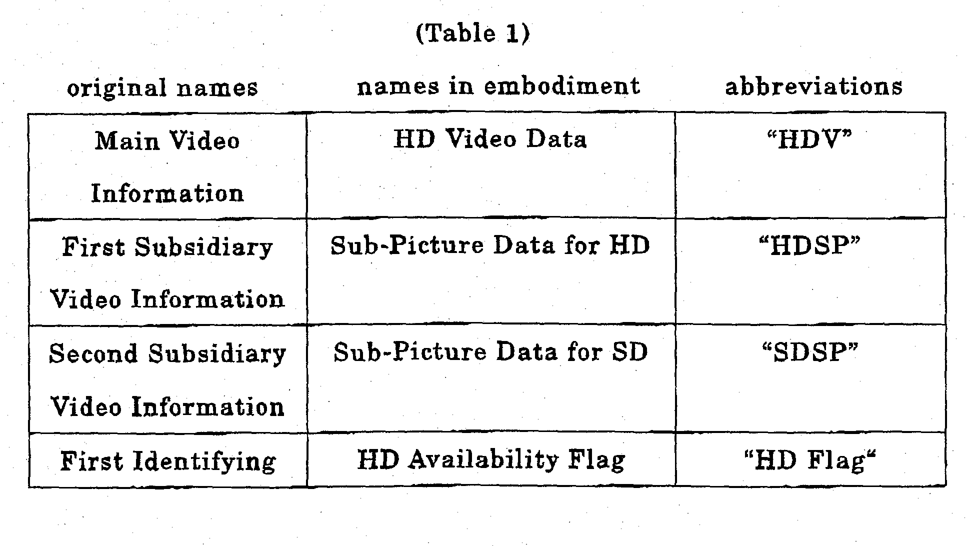

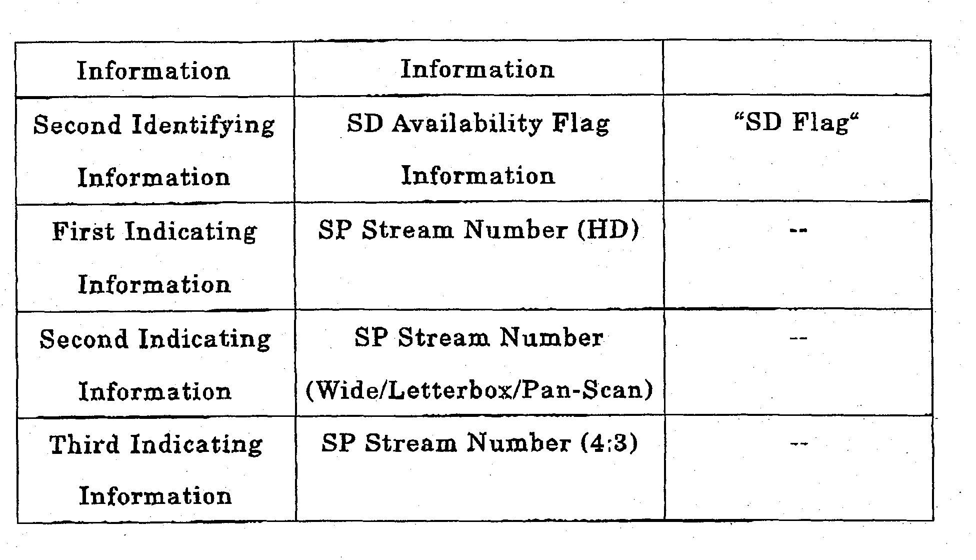

Additionally, the abbreviations listed with the double quotation marks in the right column are also applied to various informations listed in the left column, as appropriate in a following Table 2.

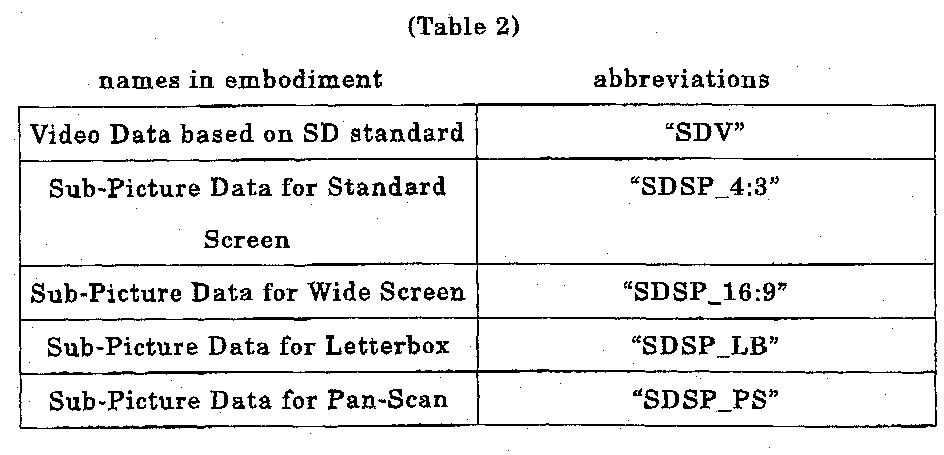

Incidentally, in the following embodiments, a "title" is a logically united unit such as a movie, a drama, a sport program, a game and so on, made of contents including both video and audio or including only video. A "VTS" may be video information or the like based on the SD standard that is recorded on the traditional DVD. On the other hand, a "VTS2" may be compressed and encoded in a second compressed encoding method such as MPEG4, for constituting titles respectively. That is, the "VTS2" may be a high vision video information or the HD standard video information that is not recorded on the traditional DVD. Relating to this, titles constituted by the "VTS2" and the "VTS" may have the same content, such as the same movie different in their standards or picture qualities. Alternatively, each of them may have one of the contents relating to each other, such as a digest version and a special version. Furthermore, they may have the different content, such as different movies in their content from each other.

The embodiments of the present invention will be explained with reference to the drawings hereinafter.

### (Information Recording Medium)

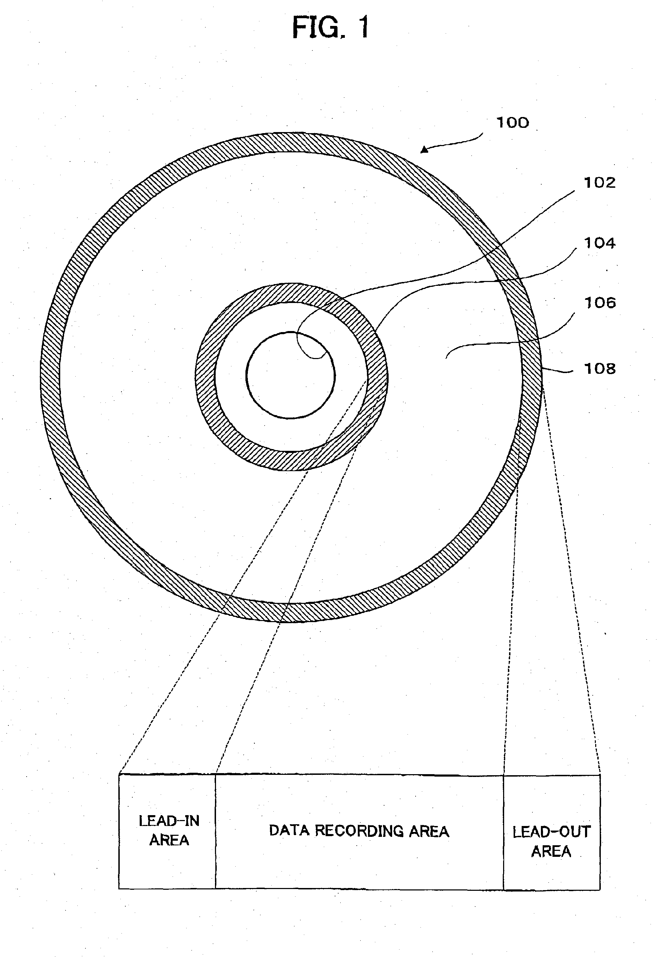

With reference to FIG. 1 to FIG. 8, an embodiment of the information recording medium of the present invention will be discussed. In this embodiment, the information recording medium according to the present invention is applied to an optical disc that can be reproduced with a red laser.

Firstly, with reference to FIG. 1, a fundamental structure of the optical disc in this embodiment will be discussed. FIG. 1 illustrates, in its upper part, a plan view schematically showing the structure of the optical disc having a plurality of areas, and illustrates, in its lower part, a conceptual view of the area structure in its radial direction, in association with the structure illustrated in the upper part of the drawing.

As shown in FIG. 1, an optical disk 100, which may be a read-only type, or may be a rewritable type in various recording method including a magneto-optical method, a phase change method or the like, each of which is recordable once or more, is provided with a lead-in area 104, a data area 106 and a lead-out area 106, on a recording surface of a disc main body having approximately 12 cm of diameter from the inner circumference to the outer circumference around a center hole 102 in the same manner as in a DVD. In each area, a reproducing track made of an array of pits (for the read-only type disc) or an alternating arrangement of groove tracks and land tracks (for the recordable type disc) is formed for example in a spiral or concentric manner around the center hole 102. The groove tracks may be wobbled. Furthermore, pre-pits may be formed in one or both of the groove tracks and the land tracks. Incidentally, the present invention is not limited to the optical disc having such three areas. For example, a file structure discussed below may be configured without the lead-in area 104 or the lead-out area 108.

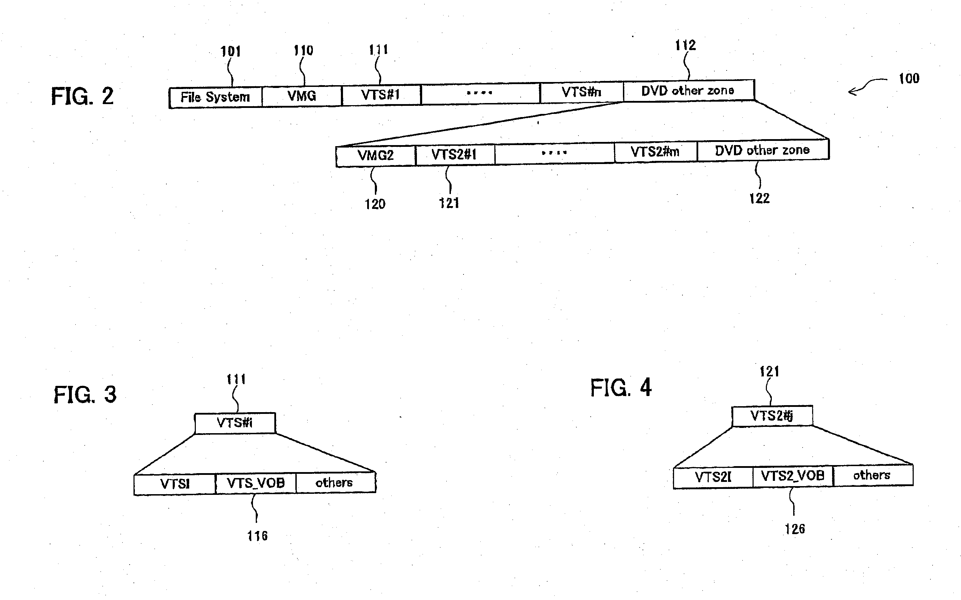

Next, with reference to FIG. 2 to FIG. 4, a structure of data recorded or to be recorded on the optical disc 100 will be discussed. FIG. 2 illustrates the structure of data recorded or to be recorded on the optical disc 100. FIG. 3 illustrates a detail of the data structure in a VTS (Video Title Set) shown in FIG. 2. FIG. 4 illustrates a detail of the data structure in a VTS2 (Video Title Set 2) shown in FIG. 2.

In FIG. 2, the optical disc 100 has a file system 101, "VMG (Video Manager)" 110, a plurality of VTS 111 (i.e. VTS#1, VTS#2,....., VTS#n) and a DVD other zone 112, as logical structure, as shown in the upper row in the drawing.

The file system 101 includes informations for managing physical recording areas for each file to be recorded on the optical disc 100 (e.g. data, data list, data file or data table). The VMG 110 is an information (e.g. data, data list, data file or data table) for managing and controlling each VTS#i (i= 1,2,...,n) 111. Each VTS#i 111 is an information compressed and encoded in accordance with MPEG1 or MPEG2 (e.g. data, data list, data file or data table).

Incidentally, in this embodiment, the VTS #i 111 may be a set of titles relating to each other (i.e. the total numbers of the subsidiary video information and the audio information in titles are the same to each other, or attribute such as applicable languages or the specification is the same to each other.).

In this embodiment, these VMG 110 and VTS#i 111 configure a first video zone on the optical disc 100. The first video zone has the data structure the same as a conventional DVD Version 1.X (Ver1.X). Then, in this first video zone, a content information based on the SD standard for example is recorded, as the VTS#i 111, which is managed and controlled by the VMG 110.

As shown in a lower row in FIG. 2, the optical disc 100 further includes a VMG2 120, a plurality of VTS2 121 (i.e. VTS2#1, VTS2#2,...., VTS2#m), and a DVD other zone 122, in the DVD other zone 112.

The VMG2 120 is an information (e.g. data, data list, data file or data table) for managing and controlling each VTS2#j (j= 1,2,...,m) 121. Each VTS2#j 121 is an information (e.g. data, data list, data file or data table) compressed and encoded in accordance with MPEG4 that is a compressed coding method different from that of the first video zone.

Incidentally, in this embodiment, the VTS2#j 121 may be a set of titles relating to each other (i.e. the total numbers of the subsidiary video information and the audio information in titles are the same to each other, or attribute such as applicable languages or the specification is the same to each other.).

In this embodiment, these VMG2 120 and VTS2#i 121 configure a second video zone on the optical disc 100. The second video zone has the data structure Version 2.0 (Ver2.0) different from a conventional DVD. Then, in this second video zone, a content information of high vision or based on the HD standard different from the aforementioned first video zone, otherwise a content information based on the SD standard the same as the aforementioned first video zone is recorded, as the VTS2#j 121, which is managed and controlled by the VMG2 120. As shown in FIG. 3, the VTS#i 111 includes a VTSI (Video Title Set Information), a VTS_VOB (Video Object for Video Title Set) 116 and others (i.e., other information).

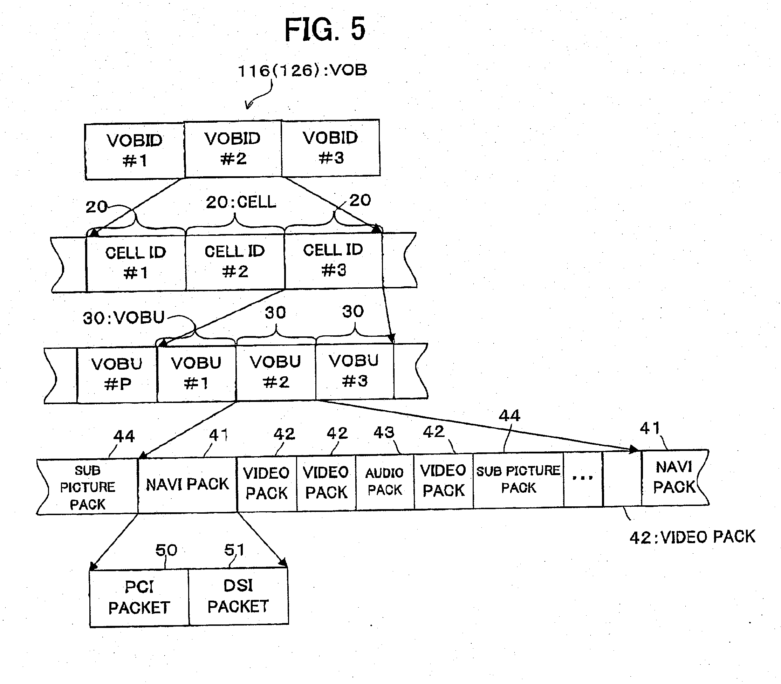

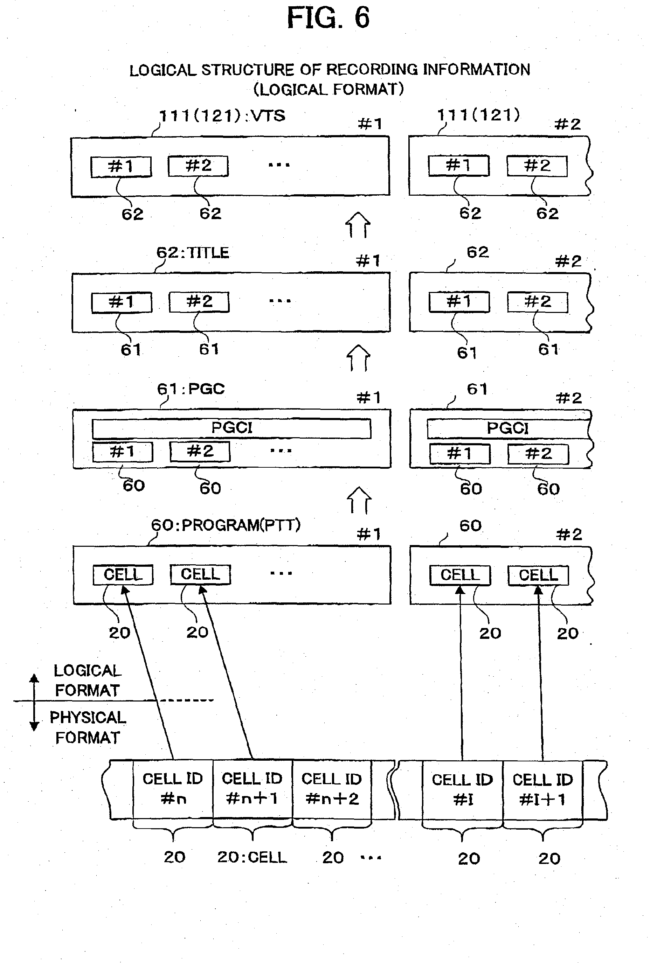

In such "VTSI", Program Chain Information (PGCI), which is various information about a program chain, that is, logical divisions made by combining a plurality of cells (which will be described later), or similar information, is recorded as the intra-VTS information or as the other information. Moreover, in each VTS_VOB 116, an entity part of video information and audio information is recorded in addition to various control information. The cells and the PGCI will be described later (refer to FIG. 5 and FIG. 6). The other information may include an entity information of a title menu that is a displayed menu for selecting captions about the VTS#i 111, otherwise a backup information of the VTSI (e.g. data, data list, data file or data table) or the like.

As shown in FIG. 4, the VTS2#j 121 includes a VTS2I (Video Title Set2 Information), a VTS2_VOB (Video Object for Video Title Set2) 126, and others,

In such "VTS2I", Program Chain Information (PGCI), which is various information about a program chain, that is, logical divisions made by combining a plurality of cells (which will be described later), or similar information, is recorded as the intra-VTS information or as the other information, as is the case of the VTSI. Moreover, in each VTS2_VOB 126, an entity part of video information and audio information is recorded in addition to various control information. The cells and the PGCI will be described later (refer to FIG. 5 and FIG. 6). The other information may include an entity information of a title menu that is a displayed menu for selecting captions about the VTS2#j 121, otherwise a backup information of the VTS21 (e.g. data, data list, data file or data table) or the like.

Next, with reference to FIG. 5 and FIG. 6, a physical format and a logical format on the optical disc 100 will be discussed. FIG. 5 illustrates a physical format (physical structure) of the optical disc 100. FIG. 6 illustrates a logical format (logical structure) of the optical disc 100.

For convenience, the explanation will start from the uppermost hierarchy in FIG. 5. The aforementioned VOB (i.e. the VTS_VOB 116 shown in FIG. 3, or the VTS2_VOB 126 shown in FIG. 4) has ID numbers (VOBID#1, #2,...), Each VOB is made with a plurality of cells 20, each of which has an ID number, respectively. Each cell 20 is made with a plurality of VOB Unit (VOBU) 30, each of which has an ID number, respectively. The VOBU 30 is an information unit, to which the information reproducing apparatus can make access, made of any of the video information (i.e., the main video information), the audio information and the sub-picture information (i.e., the subsidiary video information), or made of only a navi pack discussed below. Each VOBU 30 is made of a navi pack 41 in which a control information is stored for controlling the video information and the like included in the VOBU 30, a video pack 42 in which video data as the video information is included, an audio pack 43 in which audio data as the audio information is included and a sub-picture pack 44 in which sub-picture data as the subsidiary video information is included. In a pack header to be recorded at the head of each pack, (i) read start time information, so-called "SCR (System Clock Reference)", which indicates a read start time on a reproduction time axis, at which reading of data included in each pack from a track buffer of a reproducing apparatus discussed below for inputting it into each buffer is started, (ii) start cord for indicating a start of each pack, and/or (iii) the like are recorded. The navi pack 41 is made of (i) DSI (Data Search Information) data 51, which is a retrieve information for retrieving a video or audio to be reproduced and displayed for example, and (ii) PCI (Presentation Control Information) data 50, which is an information about a reproduction display control when the video or audio is reproduced and displayed, the video and audio being retrieved on the basis of the DSI data 51.

Next, with reference to FIG. 6, the logical format of the optical disc 100 will be discussed, in association with the PGCI.

For convenience, the explanation will be started from the lowermost hierarchy in FIG. 6. One program 60 is logically made of a plurality of cells 20, each of which is an information unit to which the information reproducing apparatus such as a DVD player can make access, and selected to make the program 60. Incidentally, a producer or author can define one program 60 or a combination of a plurality of the programs 60 as the smallest unit that an audience can freely select and watch or listen to. This unit is referred to as Part of Title (PTT). One PGC (Program Chain) 61 is logically made of a plurality of programs 60, each of which is selected to make the PGC. On the basis of the PGC 61 as a unit, the aforementioned PGCI is defined, in which (i) a reproduction sequence of cells 20 in each program 60 when each program 60 is reproduced, (ii) an address that is a record position of each cell 20 on the optical disc 100, (iii) a cell number of a head cell 20 to be reproduced in each program 60, and (iv) the like are included. In each PGC 61, data such as substantial video and audio is included as a combination of programs 60 (in other words, as a combination of cells 20), in addition to the aforementioned PGCI. One title 62 is logically made of one or more PGC's 61.

In this embodiment, one VTS#i (i=1,...,n) 111 is logically made of one or more titles 62 configured as such, under the condition that these titles 62 are based on the MPEG 1 or 2 and include the content information based on the SD standard. On the other hand, one VTS2#j (j=1,...,m) 121 is logically made of one or more titles 62 configured as such, under the condition that these titles 62 are based on the MPEG 4 and include the content information based on the HD standard.

Thus, on the optical disc 100 in this embodiment discussed with reference to FIG. 1 to FIG. 6, video data, which is an example of the main video information based on the HD standard as an example of the first standard, is multi-recorded in a stream manner as a program stream of MPEG1 or 2, otherwise a transport stream or a program stream of the MPEG4 or the like, in a VTS space made of the VTS and the VTS2, i.e. in the entity or substantial information. Furthermore, in the stream such as the program stream or the transport stream, one sub-picture data as an example of the first subsidiary video information based on the HD standard also is multi-recorded in a stream manner as a sub-picture stream. Additionally, another sub-picture data as an example of the second subsidiary video information based on the SD standard as an example of the second standard is multi-recorded in a stream manner as a sub-picture stream.

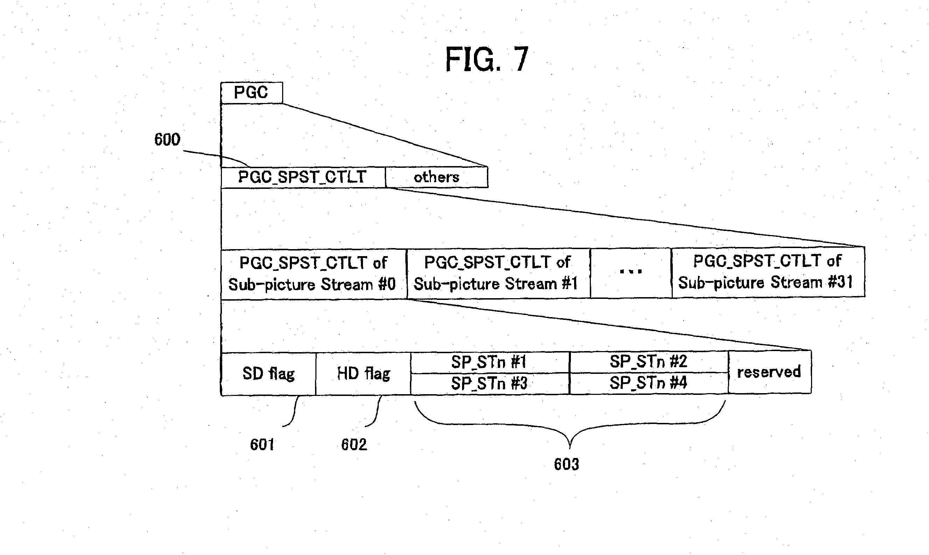

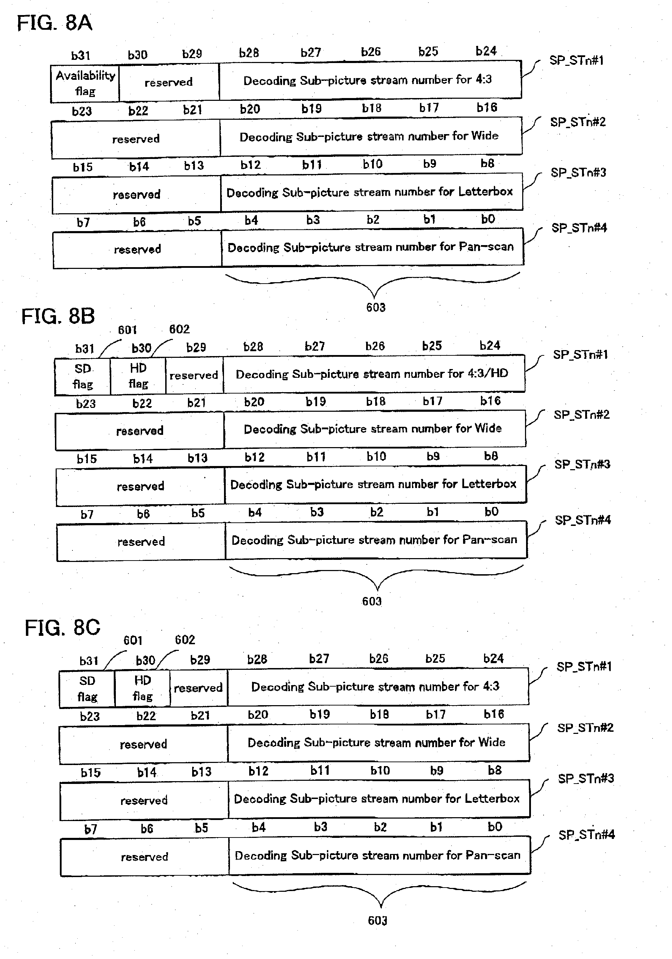

Next, with reference to FIG. 7 and FIGs. 8A to 8C, the logical information of the aforementioned PGC will be discussed, the logical information allowing the reproduction control of the optical disc 100 on which both the sub-picture data based on the HD standard and the sub-picture data based on the SD standard are recorded. FIG. 7 illustrates the logical information of the PGC to be recorded on the information recording medium according to the present invention. On the other hand, FIG. 8A illustrates a data structure in one exemplary control table shown in FIG. 7, FIG. 8B illustrates a data structure in another exemplary control table shown in FIG. 7, and FIG. 8C illustrates a data structure in still another exemplary control table shown in FIG. 8B.

In FIG. 7, as shown in the middle row, the PGC 61 is logically made of a PGC_SPST_CTLT (Program Chain Sub-Picture Stream Control Table) 600 and other informations. The PGC_SPST_CTLT 600 is a table for defining a stream number of the subsidiary video information (i.e. the sub-picture data), relative to the main video information (i.e. the main picture or video stream) such as a movie content.

In FIG. 7, as shown in lower rows, the PGC_SPST_CTLT 600 is made of PGC_SPST_CTL of sub-picture stream#0-#31, each of which includes a SD flag 601, a HD flag 602, a stream number information 603 and other area. Then, the stream number information 603 includes a SP_STn#1 (Sub-Picture Stream Number 1) in which the "first indicating information" or the "third indicating information" according to this embodiment is stored, and SP_STn#2-#4 in which the "second indicating information" according to this embodiment is stored.

The SD flag 601 is an example of the "second identifying information" according to this embodiment and indicates whether or not the effective "sub-picture data based on the SD standard" (i.e. SDSP) is stored in the stream number information 603. For example, it is understood that no effective SDSP is stored in any of SP_STn#1-#4, if the SD flag 601 is "0b". On the contrary, it is understood that the effective SDSP indicating information is stored in at least one of SP_STn#1-#4, if the SD flag 601 is "1b".

On the other hand, the HD flag 602 is an example of the "first identifying information" according to this embodiment, and indicates whether or not the effective "sub-picture data based on the HD standard" (i.e. HDSP) is stored in the stream number information 603. Furthermore, in the specific example of FIG. 8B, it is indicated that the "sub-picture data based on the HD standard indicating information" (i.e. "HDSP indicating information") is stored, instead of the "sub-picture data based on the SD standard indicating information" (i.e. "SDSP indicating information") having the aspect ratio 3:4, in the SP_STn#1. For example, if the HD flag 602 is "0b", it is understood that no effective data is stored in the stream number information 603. Particularly, in the specific example of the FIG. 8B, it is understood that no effective "HDSP indicating information" is stored in the SP_STn#1. In this case, if the SD flag 601 is "1b", it is understood that the effective SDSP is stored in the SP_STn#1. On the contrary, if the HD flag 602 is "1b", it is understood that the effective HDSP is stored in the stream number information 603. Particularly, in the embodiment of FIG. 8B, it is understood that the effective HDSP is stored in the SP_STn#1, Incidentally, a code "b" in the "0b" and "1b" means that "0" or "1" is a binary data.

In the specific example of FIG. 8A, such a HD flag 602 is not disposed in two bits of auxiliary areas from b29 to b30. In this case, when the optical disc 100 is reproduced, it is detected that the HD flag 602 is not disposed and thereby judged that the optical disc 100 is not a disc based on the HD standard but a conventional disc based on the SD standard.

On the contrary, in the specific example of FIG. 8B, such an HD flag 602 is disposed at b30, as a flag information of 1 bit. In this case, when the optical disc 100 is reproduced, it is firstly detected that the HD flag 602 is disposed and thereby judged that the stream number, indicated by the SP_STn#1 (Decoding Sub-picture stream number for 4:3/HD) recorded in five bit areas from b24 to b28, is used for either the sub-picture data based on the SD standard having the aspect ratio 4:3 or the sub-picture data based on the HD standard having the aspect ratio 16:9. Now with reference to the HD flag 602 that is the aforementioned identifying information, it can be judged which sub-picture stream number is stored in the SP_STn#1. If it is judged that the sub-picture stream number based on the SD standard is stored in the SP_STn#1, it can be also judged whether or not the stream number is effective, with reference to the aforementioned SD flag 601. In the SP_STn#2, the sub-picture data based on the SD standard of aspect ratio 16:9, i.e. the stream number of the sub-picture stream for a wide screen, can be stored. In the SP_STn#3, the stream number of the sub-picture data based on the SD standard whose data format is a letterbox format can be stored. In the SP_STn#4, the stream number of the sub-picture data based on the SD standard whose data format is a pan and scan format (also referred to as "pan-scan format") can be stored. As for these SP_STn#2-#4, it can be judged whether or not the corresponding effective sub-picture stream number based on the SD standard (wide/letterbox/pan-scan format) exists in the PGC or the title by means of the aforementioned SD flag 601.

Thus, in the example of FIG. 8B, by newly defining the HD flag 602, the SP_STn#1, which is originally a field for the "sub-picture data for a standard sized screen", i.e. "SDSP_4:3", is used as a field for the "sub-picture for the HD standard", i.e. "HDSP". That is, if the HD flag 602 is "0b" the SP_STn#1, which is the field for the "SDSP_4:3" shown in FIG. 8A, indicates the stream number of the "SDSP_4:3". On the contrary, if the HD flag 602 is "1b", the SP_STn#1, which is the field for the new "HDSP" shown in FIG. 8B, indicates the stream number of the "HDSP". Particularly, these "SDSP_4:3" and "HDSP" are used exclusively to each other. Thereby, no problem arises even if these are recorded in the common field.

In the example of FIG. 8B, as discussed later, the sub-picture stream information for the SD standard (wide/letterbox/pan-scan) shown in FIG. 8B exists, if the HD flag 602 is "1b" and the SD flag 601 is "1b", during its reproduction. In this case, if the video output mode, which is set for the information reproducing apparatus, is the SD (i.e. in the case that the information reproducing apparatus outputs signals or the like to a television monitor or the like compatible with the SD standard), a sub-picture data based on any of these SD standards is composed or synthesized as a sub-picture stream. Thereby, the composition can be executed without sacrificing the picture quality of the sub-picture.

Next, in the specific example of FIG. 8C, similarly to FIG. 8B, the HD flag 602 is disposed as 1 bit flag information at b30. In this case, when the optical disc 100 is reproduced, it is detected that the HD flag 602 is disposed and thereby judged that the stream number, which is indicated by the SP_STn#4 (Decoding Sub-picture stream number for HD) that is recorded in five bit areas from b0 to b4, is used for the sub-picture data for the HD standard.

Now, with reference to the HD flag 602 that is the aforementioned identifying information, it can be judged whether or not the sub-picture data stream for the HD that is stored in the SP_STn#4 is effective.

In the SP_STn#1 the stream number of the sub-picture data based on the SD standard having the aspect ratio 4:3 can be stored. In the SP_STn#2, the sub-picture data based on the SD standard having the aspect ratio 16:9, i.e. the stream number of the sub-picture stream for a wide screen can be stored. In the SP_STn#3, the stream number of the sub-picture data based on the SD standard whose data format is a letterbox format can be stored. As for these SP_STn#1,#2and#3, it can be judged whether or not the corresponding effective sub-picture stream number based on the SD standard (4:3/wide/letterbox format) exists in the PGC or the title by means of the aforementioned SD flag 601.

Thus, in the example of FIG. 8C, by newly defining the HD flag 602, it can be indicated that the information of the sub-picture for the HD exists. That is, if the HD flag 602 is "0b" it is understood that the value of the SP_STn#4 is not effective. On the other hand, if the HD flag 602 is "1b", it is understood that the value of the SP_STn#4 is effective, i.e. the information of the sub-picture data for the HD exists.

In this embodiment, as discussed later, the sub-picture stream information for the SD (wide/letterbox) shown in FIG. 8C exists, in the case that the HD flag 602 is "1b" and the SD flag 601 is "1b", during its reproduction. In this case, if the video output mode, which is set for the information reproducing apparatus, is SD (i.e. the case that the information reproducing apparatus outputs signals or the like to a television monitor or the like compatible with the SD standard), the sub-picture data based on any of these SD standards is composed or synthesized as the sub-picture stream. Thereby, the composition can be performed without sacrificing the picture quality of the sub-picture.

Thus, making access to the HD flag 602 in the PGC_SPST_CTLT 600 facilitates the judgement whether or not the sub-picture data based on the HD standard exists. Then, as discussed below, during the reproduction with the information reproducing apparatus, the sub-picture is not adversely affected by the down-conversion, even in the case that the main video information is down-converted to be outputted, depending on kinds of information reproducing apparatus. Therefore, it is possible to clearly display "kanji" characters for example that are included in the sub-picture.

### (Information Reproducing Apparatus)

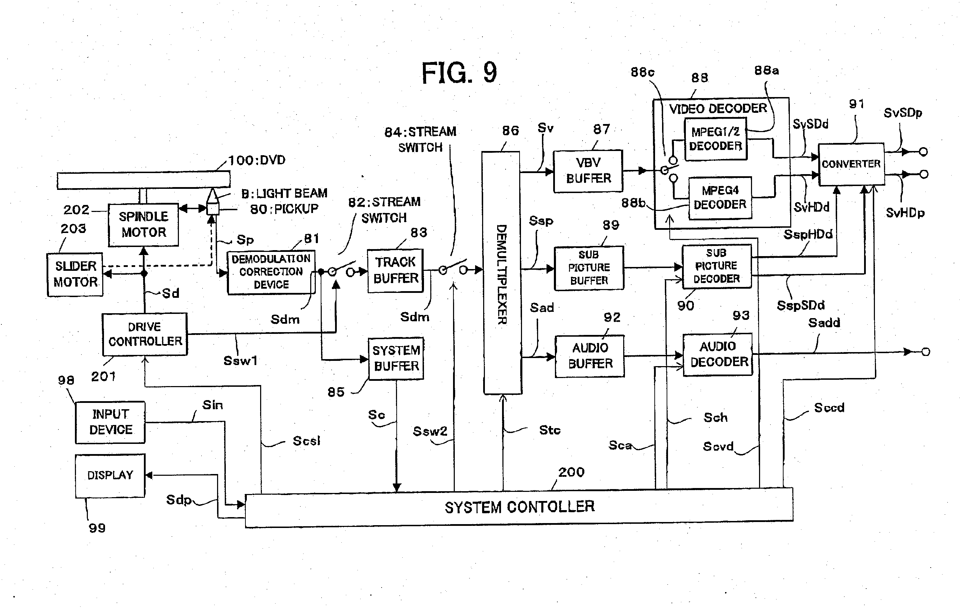

Next, with reference to FIG. 9 to FIG. 18, the embodiment of the information reproducing apparatus according to the present invention will be discussed.

### (1) Fundamental Structure of Information Reproducing Apparatus:

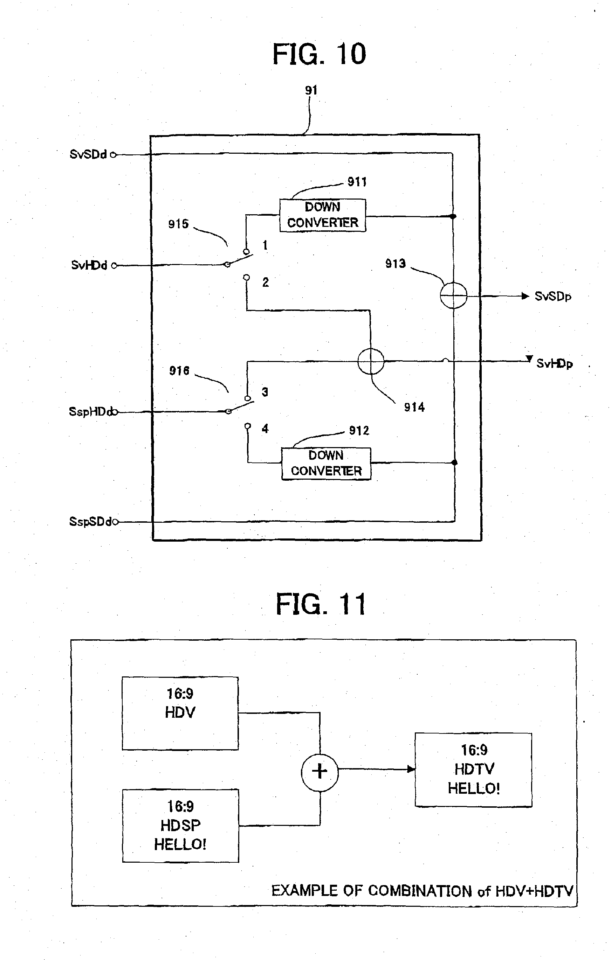

Firstly, a structure and operation of the information reproducing apparatus will be explained with reference to FIG. 9 and FIG. 10. FIG. 9 illustrates an embodiment of the information reproducing apparatus. FIG. 10 illustrates a converter according to the embodiment of the information reproducing apparatus. In this embodiment, the information reproducing apparatus is configured as a DVD player.

In FIG. 9, the information reproducing apparatus is provided with: an optical pickup 80; a demodulation correction device 81; stream switches 82 and 84; a track buffer 83; a system buffer 85; a demultiplexer 86; a Video Buffer Verifier (VBV) buffer 87; a video decoder 88; a sub-picture buffer 89; a sub-picture decoder 90; a converter 91; an audio buffer 92; an audio decoder 93; an input device 98; a display 99; a system controller 200; a drive controller 201; a spindle motor 202; and a slider motor 203.

Particularly in this embodiment, the video decoder 88 is provided with: a MPEG 1/2 decoder 88a; a MPEG 4 decoder 88b; and a shift switch 88c for shifting the input of a video signal Sv to the both decoders. The shift switch 88c is shift-controlled in response to a control signal Scvd generated and outputted by the system controller 200.

Furthermore, a decoded video signal SvHDd or SvSDd, otherwise a decoded sub-picture signal SspHDd or SspSDd is inputted to the converter 91. The video signal and/or sub-picture signal, inputted as such, are composed or synthesized depending on a control signal Seed that is generated and outputted from the system controller 200, and outputted as a video signal based on the SD standard SvSDp or a video signal based on the HD standard SvHDp. Incidentally, the detail configuration of the converter 91 is discussed later (See FIG. 10).

Incidentally, the structure shown in FIG. 9 is focused on only a part of the structure of the information reproducing apparatus configured as the video DVD player relating to reproducing the video and audio. A servo circuit and the like for servo-controlling the pickup 80, the spindle motor, the slider motor 203 and so on are in line with a conventional technique and thereby not shown nor illustrated in detail.

Next, a fundamental operation of this embodiment will be discussed, as well as a detail configuration of each component or element of the information reproducing apparatus in this embodiment.

The pickup 80 includes a laser diode, a beam splitter, an object lens, a photodetector and so on, which are not illustrated. The pickup 80 irradiates a light beam B as reproduction light onto the optical disc 100 and receives a reflection light of the light beam B from the optical disc 100. Then, it outputs a detected signal Sp corresponding to information pits formed on the optical disc 100. In this case, tracking servo control and focus servo control are performed in the same manner as the related art, with respect to the not-illustrated object lens, so that the light beam B is irradiated accurately onto information tracks on the optical disc 100 and that it is accurately focused on an information recording surface on the optical disc 100.

The detected signal Sp outputted from the pickup 80 is inputted to the demodulation correction device 81. Then, demodulation and error correction are performed to generate a demodulated signal Sdm. The demodulated signal Sdm is outputted to the stream switch 82 and the system buffer 85.

The stream switch 82 to which the demodulated signal Sdm is inputted is controlled regarding its opening and closing by a switch signal Ssw1 from the drive controller 201. In closing, the stream switch 82 lets the inputted demodulated signal Sdm go through as it is and outputs it to the track buffer 83. In contrast to this, in opening of the stream switch 82, it does not output the demodulated signal Sdm, so that unnecessary information (signal) is not inputted to the track buffer 83.

The track buffer 83 to which the demodulated signal Sdm is inputted is constructed of a First In First Out (FIFO) memory or the like. The track buffer 83 memorizes the inputted demodulated signal Sdm temporarily, and it outputs the memorized demodulated signal Sdm continuously when the stream switch 84 is closed.

The stream switch 84 to which the demodulated signal Sdm is inputted continuously is controlled regarding its opening and closing depending on a switch signal Ssw2 from the system controller 200 so that various buffers described later do not overflow in separation processing at the demultiplexer 86, or adversely that they do not stop decode processing because of its emptiness.

On the other hand, the system buffer 85 to which the demodulated signal Sdm is inputted, in addition to the track buffer 83, accumulates management information about all of the information recorded on the optical disc 100 or the like (i.e. the VMG, the VMG2, or the like), which is firstly detected when the optical disc 100 is loaded. Then, it outputs the accumulated management information as control information Sc to the system controller 200. The system buffer 85 also accumulates the DSI data 51 for each Navi Pack 41 temporarily during reproduction and outputs it as control information Sc to the system controller 200.

At the demultiplexer 86 to which the demodulated signal Sdm is inputted continuously via the stream switch 84, the video data, the sub-picture data and the audio data are extracted, for each pack, from the demodulated signal Sdm, and then outputted as a video signal Sv, a sub-picture signal Ssp and an audio signal Sad respectively to the VBV buffer 87, the sub-picture buffer 89, and the audio buffer 92 respectively.

The VBV buffer 87 to which the video signal Sv is inputted is constructed of the FIFO memory or the like. It accumulates the video signal Sv temporarily and outputs it to the video decoder 88. The VBV buffer 87 is intended to compensate variation in the amount of data for each picture in the video signal Sc, which is compressed by e.g. the MPEG 2 method or the like. The video signal Sv in which the variation in the amount of data is compensated is inputted to the video decoder 88.

In order to reproduce a title or menu screen based on the MPEG1 or MPEG2, the MPEG1/2 decoder 88a is employed, by switching the shift switch depending on the control signal Scvd, under control of the system controller 200. Then, the video signal Sv is appropriately decoded in accordance with MPEG1 or MPEG2, and then the decoded video signal SvSDd based on the SD standard is outputted. On the other hand, in order to reproduce a title or menu screen for the HD based on the MPEG4 or the like, the MPEG4 decoder 88b is employed, by switching the shift switch 88c depending on the control signal Scvd, under control of the system controller 200. Then, the video signal Sv is appropriately decoded in accordance with the MPEG4 or the like, and then the decoded video signal SvHDd based on the HD standard is outputted.

On the other hand, the sub-picture buffer 89 to which the sub-picture signal Ssp is inputted accumulates the inputted sub-picture signal Ssp temporarily and outputs it to the sub-picture decoder 90. The sub-picture buffer 89 is intended to synchronize the sub-picture data 44 included in the sub-picture signal Ssp with the video data 42 corresponding to the sub-picture data 44 and to output it. Then, the sub-picture signal Ssp synchronized with the video data 42 is inputted to the sub-picture decoder 90. Here, demodulation is performed on the basis of a control signal Sch outputted from the system controller 200. Either the decoded sub-picture signal SspHDd based on the HD or the decoded sub-picture signal SspSDd is outputted as the decoded sub-picture signal. The decoded video signal SvHDd or SvSDd outputted from the video decoder 88, otherwise the decoded sub-picture signal SspHDd or SspSDd outputted from the sub-picture decoder 90 (each of which is synchronized with the corresponding decoded video signal SvHDd or SvSDd) are mixed by the converter 91. Then, the mixed signal is outputted, as a final video signal to be displayed, i.e. the video signal SvHDp based on the HD standard or the video signal SvSDp based on the SD standard, to a display device (not shown), such as a Cathode Ray Tube (CRT), a Liquid Crystal Display (LCD), and a Plasma Display (PDP). Incidentally, signal processing in the converter will be discussed later (See FIG. 10).

The audio buffer 92 to which the audio signal Sad is inputted is constructed of the FIFO memory or the like. The audio buffer 92 accumulates the inputted audio signal Sad temporarily and outputs it to the audio decoder 93. The audio buffer 92 is intended to synchronize the audio signal Sad with the video signal Sv or sub-picture signal Ssp including corresponding video information and to output it. The audio buffer 92 delays the audio signal Sad depending on an output state of the corresponding picture information. Then, the audio signal Sad, which is time-adjusted so as to synchronize with the corresponding picture information, is outputted to the audio decoder 93. Then, it is reproduced in a linear Pulse Code Modulation (PCM) method on the basis of a control signal Sca outputted from the system controller 200. Then, it is outputted to a speaker or the like (not shown), as a decoded audio signal Sadd.

As shown in FIG. 10, the converter 91 includes a down-converter 911, a down-converter 912, a mixer 913 and a mixer 914.

The down-converter 911 as an example of the "first down-converter" according to the present invention converts the decoded video signal SvHDd based on the HD standard to the decoded video signal based on the SD standard.

The down-converter 912 as an example of the "second down-converter" according to the present invention converts the decoded sub-picture signal SspHDd based on the HD standard to the decoded sub-picture signal based on the SD standard.

The mixer 913 as an example of the "first composing device" according to the present invention mixes (i) either the decoded video signal SvSDd based on the SD standard or the decoded video signal that is down-converted from the decoded video signal SvHDd based on the HD standard by the down-converter 911, and (ii) either the decoded sub-picture signal SspSDd based on the SD standard or the decoded sub-picture signal that is down-converted from the decoded sub-picture signal SspHDd based on the HD standard by the down-converter 912, for outputting the mixed signal as the video signal SvSDp based on the SD standard.

The mixer 914 as an example of the "second composing device" according to the present invention mixes (i) the decoded video signal SvHDd based on the HD standard, and (ii) the decoded sub-picture signal SvHDp based on the HD standard, for outputting the mixed signal as the video signal SvHDp based on the HD standard.

The shift switch 915 as an example of the "first switching device" according to the present invention is suitably switched depending on the control signal Sccd that is generated by the system controller 200, for outputting the decoded video signal SvHDd to either the down-converter 911 or the mixer 914,

The shift switch 916 as an example of the "second switching device" according to the present invention is suitably switched depending on the control signal Sccd that is generated by the system controller 200, for outputting the decoded sub-picture signal SspHDd to either the down-converter 912 or the mixer 914.

These shift switches 915 and 916 are switched respectively, depending on whether the video output mode of the information reproducing apparatus is a SD mode or a HD mode, and depending on whether the signal inputted to the converter 91 is the video signal or the sub-picture signal.

That is, if the television monitor to reproduce and output informations is compatible with the HD standard, the video output mode is set for the HD mode to output the video signal SvHDp based on the HD standard. On the contrary, if the television monitor to reproduce and output informations is not compatible with the HD standard but compatible with the SD standard, the video output mode is set for the SD mode to output the video signal SvSDp based on the SD standard.

Incidentally, such a video mode setting may be done manually by the user (i.e., by the user input), or may be done automatically with a plugin arrangement.

Furthermore, on the basis of the read signal from the optical disc 100, the shift switch 915 is switched to a side "2" in FIG. 10 and the shift switch 916 is switched to a side "3" in FIG. 10, in the case that the sub-picture signal SspHDd based on the HD standard is inputted (i.e. the aforementioned HD flag is "1b", and the video output mode is the HD mode). Otherwise, on the basis of the read signal from the optical disc 100, the shift switch 915 is switched to "1" side in the case that the video signal SvHDd based on the HD standard and the sub-picture signal SspSDd based on the SD standard are inputted (i.e. the aforementioned HD flag is "0b", and the video output mode is the SD mode). In the latter case, the shift switch 916 does not matter.

Incidentally, switching between these shift switches 915 and 916 is suitably done by the system controller 200 with the control signal Seed, on the basis of the video output mode and the read HD flag 602.

Next, various specific examples of the switching control of the shift switches 915 and 916 by the system controller 200 will be discussed, with reference to FIG. 11 to FIG. 16.

FIG. 11 illustrates a composition of HDV and HDSP in the case that both HDV and HDSP are stored in the optical disc 100 and the video output mode of the information reproducing apparatus is set for the HD mode (hereinafter referred to as a "case #1").

As shown in FIG. 11, both HDV and HDSP are outputted without subjected to the down-conversion. Thereby, the shift switch 915 is switched to "2"side and the shift switch 916 is switched to "3"side, as seen in FIG. 10, for composing the sub-picture signal SspHDd based on the HD standard and the main video signal SvHDd based on the HD standard at the mixer 914 and outputting the composed video signal SvHDp to the television monitor compatible with the HD via the converter 91.

Therefore, in the case #1, it is possible to obtain the best picture quality among various specific embodiments discussed with reference to FIG. 11 to FIG. 16, because the picture quality is not subjected to the deterioration due to the down-conversion.

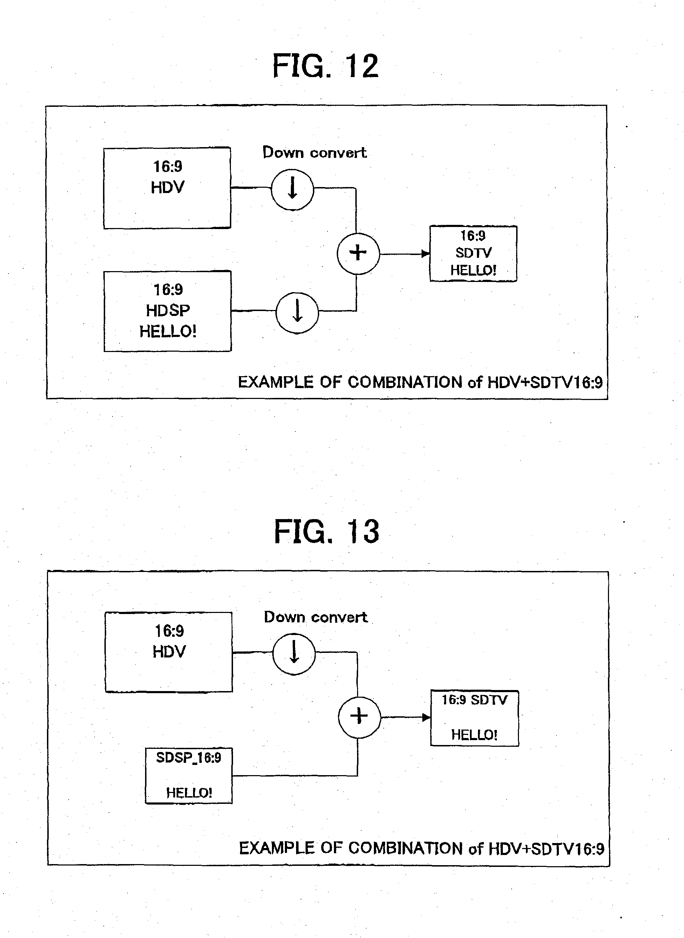

FIG. 12 is a schematic view illustrating a composition of HDV and HDSP, in the case that both HDV and HDSP are stored in the optical disc 100 and the video output mode is a SD wide mode (hereinafter referred to as a "case #2").

As shown in FIG. 12, both HDV and HDSP are outputted after subjected to the down-conversion. Thereby, the shift switch 915 is switched to "1" side and the shift switch 916 is switched to "4"side, as seen in FIG. 10, for composing the main video signal SvHDd based on the HD standard and the sub-picture signal SspHDd based on the HD standard at the mixer 914 after subjected to the down-conversion at down-converters 911 and 912, respectively, and outputting the composed video signal SvSDp to the television monitor compatible with the SD via the converter 91.

Therefore, in the case #2, it is possible to obtain the worst picture quality among various specific embodiments discussed with reference to FIG. 11 to FIG. 16, because the picture quality is subjected to the deterioration due to the down-conversion, at the worst degree.

FIG. 13 is a schematic view illustrating a composition of HDV and SDSP_16:9, in the case that both HDV and SDSP_16:9 are stored in the optical disc 100 and the video output mode is a SD wide mode (hereinafter referred to as a "case #3").

The HDV is subjected to the down-conversion, but the SDSP_16:9 is outputted without the deterioration of the picture quality. Thereby, the shift switch 915 is switched to "1" side, as seen in FIG. 10, for composing (i) the main video signal SvHDd based on the HD standard after subjected to the down-conversion at the down-converter 911 and (ii) the sub-picture signal SspSDd based on the SD standard at the mixer 913 and outputting the composed video signal SvSDp to the television monitor compatible with the SD via the converter 91.

Therefore, in the case #3, it is possible to avoid the deterioration of the sub-picture video such as captions, because the picture quality of the sub-picture signal SspSDd is not subjected to the deterioration due to the down-conversion.

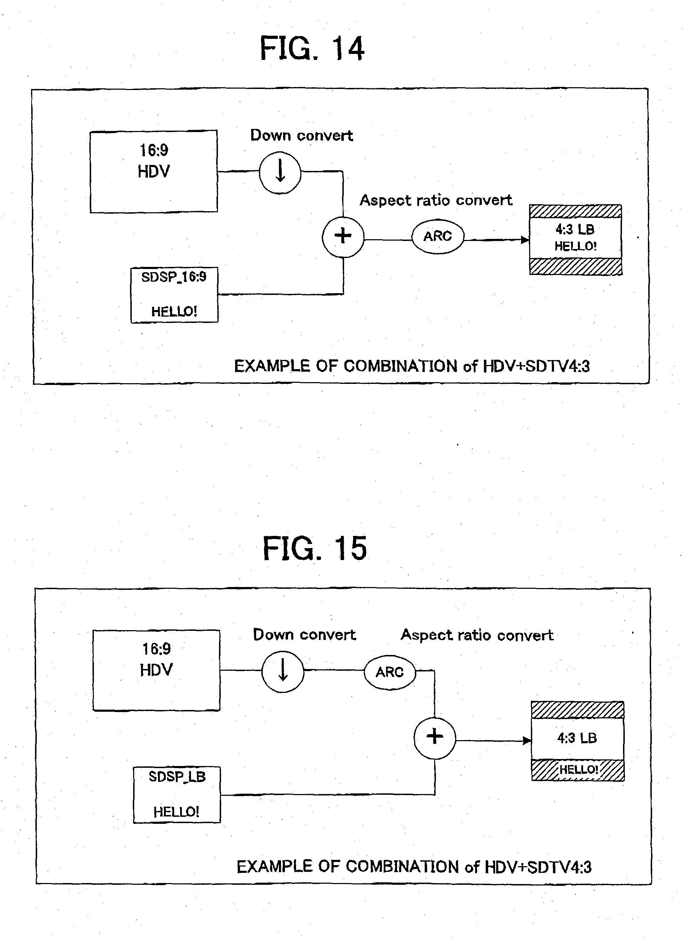

FIG. 14 is a schematic view illustrating a composition of HDV and SDSP_16:9, in the case that both HDV and SDSP_16:9 are stored in the optical disc 100 and the video output mode is a SD 4:3 mode (hereinafter referred to as a "case #4"). In this case #4, a final display is displayed in a letterbox format of aspect ratio 4:3 on the television monitor.

The HDV after subjected to the down-conversion and the SDSP_16:9 without the deterioration of the picture quality are composed. Then, the composed signal is converted to the letterbox format of aspect ratio 4:3 by an aspect ratio conversion device (ARC), and then displayed on the television monitor of aspect ratio 4:3. Thereby, the shift switch 915 is switched to "1" side, as seen in FIG. 10, for composing (i) the main video signal SvHDd based on the HD standard after subjected to the down-conversion at the down-converter 911 and (ii) the sub-picture signal SspSDd based on the SD standard at the mixer 913 and outputting the composed video signal SvSDp to the television monitor of aspect ratio 4:3 compatible with the SD, after subjected to the aspect ratio conversion.

Therefore, in the case #4, it is possible to avoid the deterioration of the sub-picture video such as captions, because the picture quality of the sub-picture signal SspSDd is not subjected to the deterioration due to the down-conversion. Nevertheless, the picture quality of the main video and the sub-picture is deteriorated, when the format is converted from the aspect ratio 16:9 to the letterbox format of aspect ratio 3:4 during the aspect ratio conversion.

FIG. 15 is a schematic view illustrating a composition of HDV and SDSP_LB, in the case that both HDV and SDSP_LB are stored in the optical disc 100 and the video output mode is a SD 4:3 mode (hereinafter referred to as a "case #5"). In this case #5, a final display is displayed in a letterbox format of aspect ratio 4:3 on the television monitor.

The HDV after subjected to the down-conversion and the aspect ratio conversion and the SDSP_LB without the deterioration of the picture quality are composed and then displayed in a letterbox format on the television monitor of aspect ratio 4:3. Thereby, the shift switch 915 is switched to "1" side, as seen in FIG. 10, for composing (i) the main video signal SvHDd based on the HD standard after subjected to the down-conversion at the down-converter 911 and the aspect ratio conversion from 16:9 to the letterbox of 4:3 and (ii) the sub-picture signal SspSDd based on the SD standard at the mixer 913 and outputting the composed video signal SvSDp to the television monitor of aspect ratio 4:3 compatible with the SD.

Therefore, in the case #5, it is possible to avoid the deterioration of the sub-picture video such as captions, because the picture quality of the sub-picture signal SspSDd is not subjected to the deterioration due to the down-conversion. Nevertheless, the picture quality is slightly deteriorated compared to the simple down-conversion, because the main video is subjected to the aspect ratio conversion after the down-conversion.

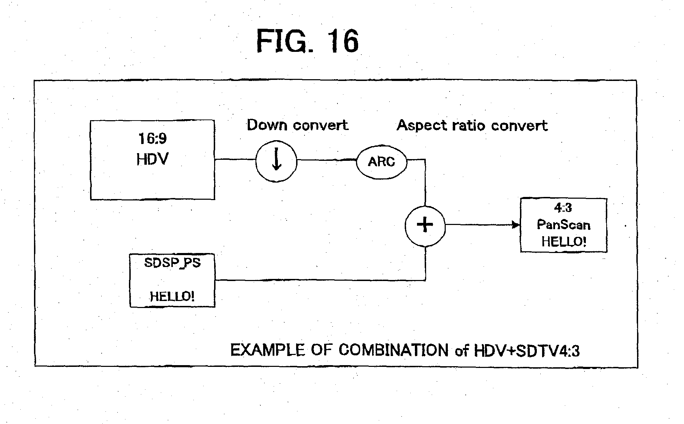

FIG. 16 is a schematic view illustrating a composition of HDV and SDSP_LB, in the case that both HDV and SDSP_PS (pan and scan) are stored in the optical disc 100 and the video output mode is a SD 4:3 mode (hereinafter referred to as a "case #6"). In this case #6, a final display is displayed in a pan and scan format of aspect ratio 4:3 on the television monitor.

Although the HDV is subjected to the down-conversion and then the aspect ratio conversion by the ARC, the SDSP_PS is composed without the deterioration of the picture quality and then displayed in a pan and scan format on the television monitor of aspect ratio 4:3. Thereby, the shift switch 915 is switched to "1" side, as seen in FIG. 10, for composing (i) the main video signal SvHDd based on the HD standard after subjected to the down-conversion at the down-converter 911 and the aspect ratio conversion from 16:9 to the pan and scan of 4:3 and (ii) the sub-picture signal SspSDd based on the SD standard at the mixer 913 and outputting the composed video signal SvSDp to the television monitor of aspect ratio 4:3 compatible with the SD.

Therefore, in the case #6, it is possible to avoid the deterioration of the sub-picture video such as captions, because the picture quality of the sub-picture signal SspSDd is not subjected to the deterioration due to the down-conversion. Nevertheless, the picture quality is slightly deteriorated compared to the simple down-conversion, because the main video is subjected to the aspect ratio conversion after the down-conversion.

As in the case #2 shown in FIG. 12, in the case that the HDSP is simply down-converted before the composition, the complicated sub-picture such as a kanji character may be deteriorated to an illegible degree. Nevertheless, as in cases #3 to #6 shown in FIG. 13 to FIG. 16, in the case that the SDSP (SDSP_16:9, SDSP_LB, SDSP_PS) is stored in the optical disk 100, the system can detect it and use the appropriate SDSP to avoid the deterioration of the picture quality of the sub-picture.

As in the case #1 shown in FIG. 11, in the case that such a SDSP (SDSP_16:9, SDSP_LB, SDSP_PS) is not stored in the optical disc 100, the system can detect it and then, as the second best solution, down-convert and use the HDSP.

### (2) Operation of Information Reproducing Apparatus:

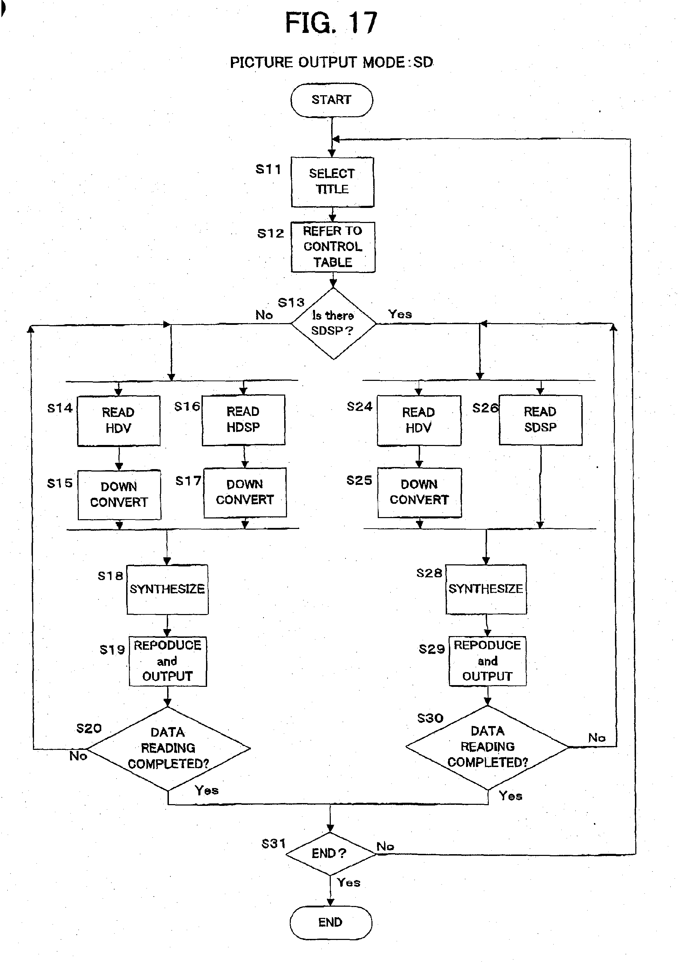

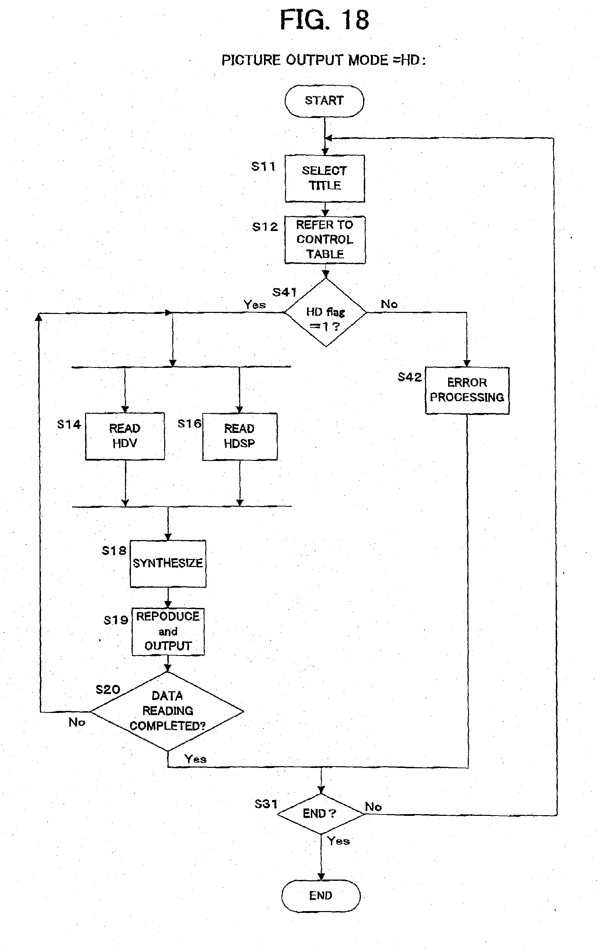

Next, with reference to FIG. 17 and FIG. 18, there is discussed a reproduction sub-routine for composing the HDV and the SDSP, on the basis of (i) the PGC_SPST_CTLT 600 including the HD flag 602 or the like and (ii) the video output mode, and then displaying and outputting the composed information.

Firstly, a reproduction sub-routine in the information reproducing apparatus in the case that the video output mode is set for the SD mode will be discussed, with reference to FIG. 17. FIG. 17 illustrates an operation in this case.

Incidentally, the following reproduction sub-routine is generally performed by the system controller 200 of the information reproducing apparatus (see FIG. 9), which acts in accordance with a computer program for the reproduction control that is downloaded via a communication network or loaded from a recording medium.

In FIG, 17, as an initial state, it is assumed that the user recognizes the disc jacket of the optical disc 100 and thereby the title number of the desired title. Now, the operation of the reproduction sub-routine after the user mounts the optical disc 100 on the information reproducing apparatus and manipulates a title selection key will be discussed.

Firstly, a processing relating to the title selection, such as a title menu display, and the corresponding a title key selection input detection (step S11). As a result, once the desired title (the title to be reproduced) is selected, then a position in the PGC_SPST_CTLT 600 corresponding to the selected title is referred (step S12). Now, the SD flag 601 and the HD flag 602 are referred, and furthermore the stream number information 603 (see FIG. 7) is referred.

As a result, it is judged whether or not the SDSP exist in the sub-picture data that forms the title to be reproduced (step S13). For example, in the aforementioned cases 3 to 6 (see FIG. 13 to fig 16), it is judged that the SDSP exists. On the contrary, in the aforementioned case #2 (see FIG. 12), it is judged that the SDSP does not exist.

As a result of the judgement at the step S13, if the SDSP does not exist (step S13: NO), the HDV is read (step S14) and then down-converted through the down-converter 911 (see FIG. 10) (step S15). Meanwhile, the HDSP is read (step S16), and then down-converted through the down-converter 911 (see FIG. 10) (step S17). Then, the HDV and the HDSP, which are down-converted respectively, are composed at the mixer 913 (step S18) and reproduced/outputted to a television monitor compatible with the SD standard (step S19).

Then, it is judged whether or not the reading of the HDV and the HDSP is completed (step S20). If the reading is not completed (step S20: NO), the process goes back to steps 14 and 16 for repeating the processing after these steps.

On the other hand, if the reading is completed (step S20: YES), it is judged whether or not the process is to be terminated, depending on the existence of an input such as the end command (step S31). If the process is to be terminated (step S31: YES), a series of reproduction processing is terminated.

On the other hand, if the process is not to be terminated (step S31: NO), the process goes back to the step S11 for repeating the processing thereafter.

On the other hand, as a result of the judgement at the step S13, if the SDSP exists (step S13: YES), the HDV is read (step S24) and then down-converted through the down-converter 911 (see FIG. 10) (step S25). Meanwhile, the SDSP is read (step S26). Then, the HDV that is down-converted and the SDSP that is not down-converted are composed at the mixer 913 (step S28) and then reproduced/outputted to a television monitor compatible with the SD standard (step S29).

Then, it is judged whether or not the reading of the HDV and the SDSP is completed (step S30). If the reading is not completed (step S30: NO), the process goes back to steps 24 and 26 for repeating the processing after these steps.

On the other hand, if the reading is completed (step S30: YES), it is judged whether or not the process is to be terminated, depending on the existence of an input such as the end command (step S31). If the process is to be terminated (step S31: YES), a series of reproduction processing is terminated.

On the other hand, if the process is not to be terminated (step S31: NO), the process goes back to the step S11 for repeating the processing thereafter.

As discussed above, in the case that the video output mode is the SD and the SDSP is recorded in advance in the optical disc 100, the recorded SDSP can be used to avoid that the SDSP is adversely affected by the down-conversion, and therefore used to display clearly kanji characters or the like that are included in the sub-picture,

Next, a reproduction sub-routine in the information reproducing apparatus in the case that the video output mode is set for the HD mode will be discussed, with reference to FIG. 18. FIG. 18 illustrates an operation in this case. Incidentally, the same steps as those in FIG. 17 carry the same step numbers, whose explanation is omitted as appropriate.

In FIG. 18, after the steps S11 and S12 are performed, the HD flag 602 in the PGC_SPST_CTLT 600 (see FIG. 7 and FIG. 8) is referred.

As a result, it is judged whether or not the HD flag 602 is "1b" (step S41).

As a result of the judgement at the step S41, if the HD flag is "1b" (step S14: YES), the HDV is read (step S14). Meanwhile, the HDSP is read (step S16). Then, the HDV and the HDSP, both of which are not down-converted, are composed at the mixer 913 (step S18) and reproduced/outputted to a television monitor compatible with the HD standard (step S19).

Therefore, as in the aforementioned case #1 (see FIG. 11), it is possible to obtain the best picture quality among various specific embodiments discussed with reference to FIG. 11 to FIG. 16, because the picture quality is not subjected to the deterioration due to the down-conversion.

Then, the steps S20 and S31 are performed.

On the other hand, as a result of the judgement at the step S41, if the HD flag is not "1b" (step S41: NO), the processing after the step S31 are performed after a preset predetermined kinds of error processing such as output display or audio output of error massage, or the ejection of the optical disc 100 from the tray, is performed (step S42), because the optical disc 100 can not satisfy the requirement of the video output mode, HD. Incidentally, if the sub-picture data based on the SD standard exists in this case, it is possible to upconvert the data and then reproduce/output the upconverted data to a television monitor compatible with the HD.

In any case, if it is judged that the process is to be terminated (step S31: YES), depending on the existence of an input such as an end command, a series of reproduction processing is terminated.

As discussed above, in the case that the video output mode is the HD, and furthermore the HDV and HDSP are recorded in advance in the optical disc 100, no down-conversion is necessary to use these information, as shown in FIG. 11. Therefore, it is possible to clearly display kanji characters or the like that are included in the sub-picture, without the adverse influence of the down-conversion. Additionally, the main video also can be displayed without deterioration of the picture quality.

Incidentally, in the aforementioned embodiment, the optical disc 100 and the player to reproduce the optical disc 100 are discussed as an embodiment of the information recording medium and an embodiment of the information reproducing apparatus, respectively. Nevertheless, the present invention is not limited to the aforementioned optical disc and the player thereof but also applicable to various information recording media and players to reproduce these media, compatible with a high density recording or a high transfer rate.

## Claims

1. An information recording medium (100) **characterized in that** there are recorded on said information recording medium:
main video information (HDV), that is representative of a main video picture and is based on a first standard with a first definition so as to reproduce and display the main video picture at the first definition;
first subsidiary video information (HDSP), that is representative of a sub-picture and is based on the first standard so as to reproduce the sub-picture at the first definition in such a state that the sub-picture is composed with the main video picture reproduced and displayed at the first definition; and
second subsidiary video information (SDSP), that is representative of the sub-picture and is based on a second standard with a second definition which is inferior to the first definition so as to reproduce the sub-picture at the second definition in such a state that the sub-picture is composed with the main video picture reproduced and displayed at the second definition, on the basis of said main video information that is down-converted to the second definition.

2. The information recording medium (100) according to claim 1, **characterized in that** there is further recorded on said information recording medium: first identifying information (HD flag) to indicate whether or not said first subsidiary video information is recorded.

3. The information recording medium (100) according to claim 2, **characterized in that** there is further recorded on said information recording medium: second identifying information (SD flag) to indicate whether or not said second subsidiary video information is recorded.

4. The information recording medium (100) according to claim 2 or 3, **characterized in that**
said main video information (HDV), said first subsidiary video information (HDSP) and said second subsidiary video information (SDSP) are respectively formed into streams to be thereby multiplexed-and -recorded,
a first indicating information to indicate a stream relating to said first subsidiary video information and a second indicating information to indicate a stream relating to said second subsidiary video information are further recorded on,
said main video information includes (i) a first main video information that is representative of one video picture having a first aspect ratio as the main video picture and (ii) a second main video information that is representative of another video picture having a second aspect ratio different from the first aspect ratio as the main video picture,
an indicating information recording area is prepared in a predetermined area on said information recording medium, for recording a third indicating information to indicate a stream relating to a third subsidiary video information, that is based on the second standard with the second definition and is to be composed with said second main video information, and
said first indicating information is recorded instead of said third indicating information in the indicating information recording area, in a case that said first identifying information indicates that said first subsidiary video information is recorded.

5. The information recording medium (100) according to any one of claims 1 to 4, **characterized in that** said second subsidiary video information (SDSP) is representative of one sub-picture having the aspect ratio same as the aspect ratio of the main video picture, as the sub-picture.

6. The information recording medium (100) according to any one of claims 1 to 4, **characterized in that** said second subsidiary video information (SDSP) is representative of one sub-picture in a letterbox format, as the sub-picture.

7. The information recording medium according to any one of claims 1 to 4, **characterized in that** said second subsidiary video information (SDSP) is representative of one sub-picture in a pan and scan format, as the sub-picture.

8. An information reproducing apparatus for reproducing information from the information recording medium (100) according to any one of claims 1 to 7, **characterized in that** said apparatus comprises:
a reproducing device (80, 81)for reproducing said main video information (HDV) as well as said first and second subsidiary video informations (HDSP, SDSP) from said information recording medium;
a first down-converter (911) to down-convert said main video information that is reproduced by said reproducing device; and
a first composing device (913) for composing said second subsidiary video information that is reproduced by said reproducing device with said main video information that is down-converted by said first down-converter.

9. The information reproducing apparatus according to claim 8, **characterized in that** said apparatus further comprises:
a second down-converter (912) for down-converting said first subsidiary video information that is reproduced by said reproducing device to the second definition; and
a judging device (200) for judging whether or not said second subsidiary video information is recorded on said information recording medium,
wherein said first composing device (913) composes said first subsidiary video information that is down-converted by said second down-converter with said main video information that is down-converted by said down-converter, in accordance with a result of a judgement indicating that said second subsidiary video information is not recorded on said information recording medium.

10. The information reproducing apparatus according to claim 9, **characterized in that** said apparatus further comprises:
a second composing device (914) for composing said main video information (HDV) that is reproduced by said reproducing device with said first subsidiary video information (HDSP) that is reproduced by said reproducing device;
a first switching device (915) for outputting said main video information selectively to either said first down-converter (911) or said second composing device; and
a second switching device (916) for outputting said first subsidiary video information selectively to either said second down-converter (912) or said second composing device.

11. An information reproducing method of reproducing information from the information recording medium (100) according to any one of claims 1 to 7, **characterized in that** said method comprises:
a reproducing process of reproducing said main video information (HDV) as well as said first and second subsidiary video informations (HDSP, SDSP) from said information recording medium;
a first down-converting process of down-converting said main video information that is reproduced at said reproducing process; and
a first composing process of composing said second subsidiary video information that is reproduced at said reproducing process with said main video information that is down-converted at said first down-converting process.

12. A computer program **characterized in that** said computer program tangibly embodies a program of instructions executable by a computer to make the computer function as the information reproducing apparatus according to any one of claims 8 to 10.
